# EUROPÄISCHE PATENTSCHRIFT

(11) **EP 0 458 019 B1**
(45) Veröffentlichungstag und Bekanntmachung des Hinweises auf die Patenterteilung: **05.10.1994**
(21) Anmeldenummer: 91103333.0
(22) Anmeldetag: 05.03.1991
(51) Int. Cl.: G08G 1/0968

(54) **Bedien- und Anzeigegerät für Verkehrsinformationen in einem Kraftfahrzeug**
Control- and display device for traffic information in a vehicle
Appareil de commande et d'affichage d'informations routières dans un véhicule

(30) Priorität: 22.05.1990 DE 4016498; 22.05.1990 DE 4016499
(43) Veröffentlichungstag der Anmeldung: 27.11.1991
(73) Patentinhaber: SIEMENS AKTIENGESELLSCHAFT, 80333 München (DE)
(72) Erfinder: v. Tomkewitsch, Romuald, W-8026 Ebenhausen-Zell (DE)

(56) Entgegenhaltungen:
- EP-A- 0 322 573
- DE-A- 3 248 719
- DE-A- 3 408 728
- DE-C- 3 445 668

## Beschreibung

Die Erfindung bezieht sich auf ein Bedien- und Anzeigegerät gemäß dem Oberbegriff des Anspruchs 1.

Für ein interaktives dynamisches Verkehrsmanagement benötigt man in Fahrzeugen Bedien- und Anzeigegeräte, mit denen sich Fahrer alle notwendigen Informationen beschaffen können, wie z.B. Leitempfehlungen für die kürzesten, schnellsten oder die niedrigste Fahrtkosten verursachenden Routen, Park- und Touristeninformationen usw. Es soll auch möglich sein, mit diesen Geräten automatisch aus fahrenden Fahrzeugen Straßenbenutzungsgebühren zu entrichten sowie Parkplätze zu buchen.

In der deutschen Patentschrift 29 23 634 ist ein Verkehrsleitsystem beschrieben, für das man Bedien- und Anzeigegeräte der hier genannten Art benötigt. Sie sind ein Bestandteil der erforderlichen Fahrzeugausrüstung, zu der außer dem Navigationsrechner ein Kommunikationsgerät zum Datenaustausch mit straßenseitigen Einrichtungen (Baken), eine Magnetfeldsonde zur Fahrtrichtungsbestimmung und ein Wegimpulsgeber zur Messung der zurückgelegten Wegstrecke gehören.

Ferner ist ein System für die automatische Entrichtung von Autobahngebühren bekannt, für das das oben erwähnte Gerät ebenfalls verwendbar sein soll.

In der europäischen Offenlegungsschrift 0 322 573 ist ein Bedien- und Anzeigegerät für ein Verkehrsleitsystem beschrieben, welches als kompaktes Fahrzeugterminal ausgebildet und auf dem Armaturenbrett eines Kraftfahrzeugs angeordnet ist. Dieses Gerät weist u.a. auch die Datenübertragungseinrichtung zur Bake in diesem Fall mit Hilfe der Infrarotlichtübertragung auf. Dieses Fahrzeugterminal hat jedoch verschiedene Nachteile. Für die Datenübertragung mit Hilfe von Infrarotstrahlung sieht man mittlerweile Einrichtungen in den Außenspiegel des Fahrzeugs vor. Vielfach wird das Terminal auf dem Armaturenbrett als störend empfunden, zum anderen ist man bestrebt, elektronische Zusatzgeräte, wie z.B. CD-Player oder Leistungsendstufen im Bereich des Autoradios, also in der Mittelkonsole des Fahrzeugs, einzubauen.

Aus der DE-Al-34 08 728 ist gemäß Oberbegriff der Ansprüche 1 und 2 eine Bedien- und Anzeigeeinrichtung für Informationssysteme in Kraftfahrzeugen bekannt, bei der ein mobiler Kleinrechner mit zwei Tastenfeldern und einer Anzeigeeinheit in einer Ausnehmung einer Schalttafel eines Fahrzeuges ein- und ausschiebbar angeordnet ist. Dabei ist das zweite Tastenfeld so angeordnet, daß es nicht ständig, z.B. bei eingeschobenem Kleinrechner, bedient werden kann.

Aufgabe der Erfindung ist es, ein Bedien- und Anzeigegerät so weiterzubilden, daß ein einfacher, evtl. nachträglicher Einbau in einem Kraftfahrzeug ohne umfangreichen Installationsaufwand möglich ist. Dabei sollen Symbole und Schriftzeichen für die optische Anzeige von Leitinformationen so groß wie möglich sein, daß der Kraftfahrer sie mühelos während der Fahrt erkennen kann und die Bedienung so einfach wie möglich sein, damit der Fahrer vom Verkehrsgeschehen nicht abgelenkt wird.

Diese Aufgabe wird bei einem obengenannten Bedien- und Anzeigegerät mit den Merkmalen des Anspruchs 1 oder 2 gelöst.

In einer ersten Ausgestaltung der Erfindung bildet das Bedien- und Anzeigegerät mit dem dazugehörigen Navigationsrechner eine kompakte Einheit und entspricht mit seinen Ausmaßen den genormten Maßen für Autoradios, so daß es in einen vorhandenen Einbaurahmen für Autoradios ohne großen Aufwand eingebaut werden kann.

In einer anderen Ausgestaltung der Erfindung ist der Navigationsrechner in einem dafür vorgesehenen Autoradio integriert, wobei das Bedien- und Anzeigegerät als eine an der Frontseite des Autoradios angeordnete Klappe ausgebildet ist.

An der Frontseite des Bedien- und Anzeigegerätes ist ein großes Grafikdisplay für die Leitinformationsanzeige und daneben zusätzlich ein separates Schriftzeichendisplay sowie eine aufklappbare Bedienvorrichtung mit einem Sichtfenster vorgesehen. Im hochgeklappten Zustand ist durch das Sichtfenster der Blick auf das Schriftzeichendisplay frei. Zur Bedienung des Gerätes für die wichtigsten Funktionen, die auch während der Fahrt möglich sein sollen, sind auf der Vorderseite der Bedienvorrichtung, also bei hochgeklappter Bedienvorrichtung, die wesentlichen Bedienelemente, z.B. Tasten, angeordnet und bilden ein erstes Bedienfeld. Für eine umfangreichere Bedienung des Gerätes ist auf der Innenseite der Bedienvorrichtung eine Volltastatur, die ein zweites Bedienfeld bildet, angeordnet, das bei heruntergeklappter Bedienvorrichtung bedient werden kann. Dabei ist zweckmäßigerweise das Bedien- und Anzeigegerät bzw. die Klappe mit dem Navigationsrechner bzw. Autoradio elektrisch und mechanisch lösbar verbunden.

Das Bedien- und Anzeigegerät gestattet somit eine vielfältige Bedienfunktion. Dabei kann durch eine einfache Bedienerführung auch solchen Personen die Handhabung ermöglicht werden, die nicht gewohnt sind, mit Schreibmaschinen, Textgeräten bzw. Computern umzugehen. Hierbei sind einfache Bedienvorgänge auch während der Fahrt möglich. Hingegen können kompliziertere Bedienvorgänge, wie Einspeicherung von Zieladressen und Koordinaten, mit Hilfe der Volltastatur nur bei stehendem Fahrzeug durchgeführt werden. Deshalb ist in vorteilhafter Weise ein Schalter vorgesehen, der von der hochgeklappten Bedienvorrichtung betätigbar ist, so daß die frontseitig angeordneten wenigen Bedientasten elektrisch entriegelt sind. Bei heruntergeklappter Bedienvorrichtung wird über diesen Schalter die Volltastatur entriegelt, wobei aus Gründen der Verkehrssicherheit vorgesehen ist, die Bedienbarkeit der Volltastatur nur zu ermöglichen, wenn das Fahrzeug steht, d.h. wenn der Wegeimpulsgeber und der damit verbundene Navigationsrechner den Fahrzeugstillstand signalisiert.

In vorteilhafter Weise weist das Bedien- und Anzeigegerät in dem Grafik- oder Schriftzeichendisplay eine Anzeige auf, die den Zustand der aufgeklappten Bedienvorrichtung bei fahrendem Fahrzeug signalisiert bzw. eine Aufforderung zum Schließen der Bedienklappe anzeigt. Eine derartige Aufforderung kann auch elektroakustisch ausgegeben werden.

In einer zweckmäßigen Ausgestaltung ist das Bedien- und Anzeigegerät bzw. die Klappe vom Navigationsrechner abtrennbar. Dafür sind auf der Rückseite des Bedien- und Anzeigegerätes und an der Frontseite des Navigationsrechners entsprechende Kontaktelemente für eine elektrische Verbindung vorgesehen. Dabei weist das Bedien- und Anzeigegerät einen eigenen Zielspeicher (Adressen, Koordinaten) und einen separaten Anschluß für eine externe Stromversorgung auf, so daß das vom Navigationsrechner getrennte Anzeige- und Bediengerät zu Hause oder vom Beifahrer bedient werden kann.

In einer weiteren Ausgestaltung der Erfindung weist das Bedien- und Anzeigegerät bzw. die Klappe eine Einschuböffnung für eine Chipkarte und der Navigationsrechner gesonderte Chipkartenkontakte an entsprechender Stelle auf, um den Navigationsrechner mit der Chipkarte direkt elektrisch zu verbinden, wobei im Navigationsrechner ein Chipkarten-Lesegerät vorgesehen ist. Die Chipkarte kann beispielsweise für die automatische Entrichtung von Autobahngebühren oder auch Parkgebühren verwendet werden. Die Verwendung der Chipkarte ist auch für andere Zwecke möglich, beispielsweise, wenn in einer anderen Ausgestaltung der Erfindung das erfindungsgemäße Bedien- und Anzeigegerät mit Navigationsrechner auch Wähl- und Speicherfunktionen eines Autotelefons übernimmt.

Ist das gesamte Bedien- und Anzeigegerät als Klappe ausgebildet, die an der Frontseite des dafür vorgesehenen Autoradios mit integriertem Navigationsrechner angeordnet ist, so sind bei dem nach unten geklappten Bedien- und Anzeigegerät weitere, jedoch selten benutzte Bedienelemente für Autoradios, das ein Kassettengerät aufweisen kann, zugänglich. In vorteilhafter Weise ist das Bedien- und Anzeigegerät bzw. die Klappe mit dem zugehörigen Autoradio und integriertem Navigationsrechner so ausgebildet, daß auch bei hochgeklapptem Bedien- und Anzeigegerät das Autoradio in seinen wesentlichen Funktionen mit Hilfe der Tasten an der Frontseite, dem ersten Bedienfeld, bedient werden kann. Für diesen Zweck ist eine der frontseitig auf dem Bedienfeld angebrachten Tasten als Betriebsart-Wählschalter (Mode-Taste) ausgebildet, mit welcher Taste die Betriebsart Navigation oder Radioempfang oder weitere Funktionen, wie z.B. Autotelefon, eingeschaltet werden.

Weitere Einzelheiten und Vorteile der Erfindung ergeben sich aus der Beschreibung der Erfindung, die im folgenden anhand der Zeichnung erläutert wird. Dabei zeigen
Fig. 1 ein erfindungsgemäßes Bedien- und Anzeigegerät mit Navigationsrechner mit hochgeklappter Bedienvorrichtung,
Fig. 2 mit heruntergeklappter Bedienvorrichtung und
Fig. 3 das Kombinationsgerät mit Autoradio und integriertem Navigationsrechner mit heruntergeklappter Klappe bzw. Bedien- und Anzeigegerät.

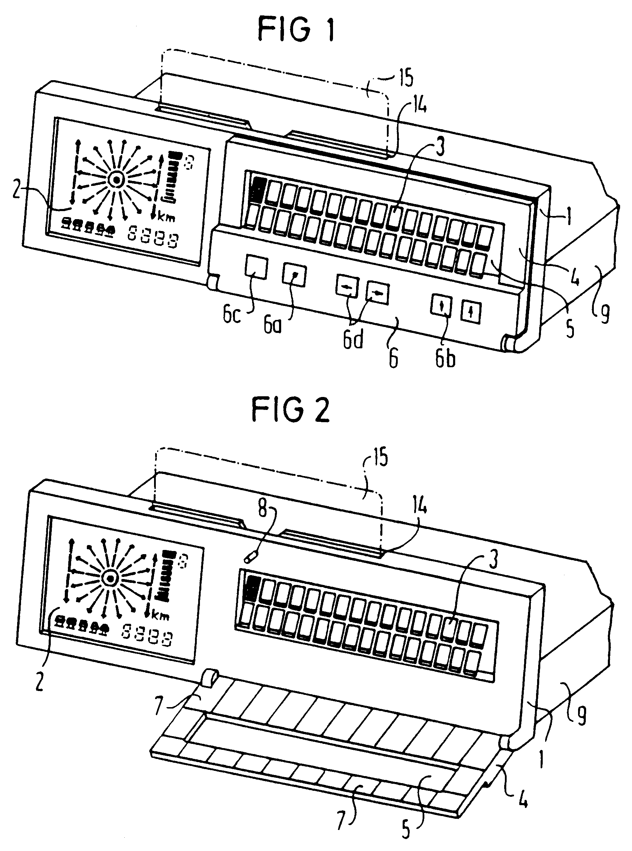

Das Bedien- und Anzeigegerät 1 bzw. die Klappe 17 ist mit dem zugeordneten Navigationsrechner 9 in Fig.1 gezeigt. Eine derartige Einheit läßt sich aufgrund der entsprechenden Maße in dem genormten Einbauraum für ein Autoradio installieren. Dabei weist in diesem Ausführungsbeispiel das Bedien- und Anzeigegerat 1 auf seiner linken Frontseite ein an sich bekanntes Grafik-Display 2 für die Anzeige von Richtungspfeilen, Fahrspurempfehlungen und weiteren optischen Symbolen auf. Im rechten Bereich der Frontseite weist das Bedien- und Anzeigegerät ein Schriftzeichenfeld 3 für Buchstaben und Ziffern zur Ausgabe von Kurztexten auf. Das Schriftzeichenfeld 3 ist großflächig ausgebildet und wird von einer herunterklappbaren Bedienvorrichtung 4 umgeben, oder anders ausgedrückt, diese Bedienfeldklappe 4 weist ein großes Sichtfenster 5 auf, das im hochgeklappten Zustand den Blick auf das Schriftzeichenfeld 3 freigibt. In diesem Ausführungsbeispiel sind die Bedienelemente des ersten Bedienfeldes 6 unter dem Sichtfenster 5. Diese Tasten 6a,6b,... gestatten ein Bedienen im hochgeklappten Zustand.

In Fig.2 ist das Bedien- und Anzeigegerät 1 bzw. die Klappe 17 mit zugehörigem Navigationsrechner 9 mit heruntergeklappter Bedienvorrichtung 4 gezeigt. Die Bedienvorrichtung 4 weist als zweites Bedienfeld eine Volltastatur 7 auf, die aus mehreren Tastenreihen besteht. Bei diesem Ausführungsbeispiel sind oberhalb des Sichtfensters 5 zwei Reihen und unterhalb des Sichtfensters 5 eine Tastenreihe angeordnet. Die Stellung der Bedienvorrichtung 4 wird durch einen Schalter 8 abgetastet, der bei hochgeklappter Bedienvorrichtung (Ruhestellung) beispielsweise nur die Tasten 6a,6b, ... des ersten Bedienfeldes 6 elektrisch entriegelt und damit zur Bedienung freigibt, so daß auch während das Fahrzeug fährt, der Fahrer den Navigationsrechner bzw. das Autoradio bedienen kann. Ist jedoch die Bedienvorrichtung 4 heruntergeklappt, so läßt sich die Volltastatur 7 bedienen, allerdings nur, wenn der an den Navigationsrechner 9 angeschlossene Wegimpulsgeber, der hier in der Zeichnung nicht dargestellt ist, keine Impulse liefert und damit signalisiert, daß das Fahrzeug steht. Um Fehlbetätigungen über die Tasten 6a,6b,... durch unbeabsichtigtes Berühren bei heruntergeklappter Bedienvorrichtung 4 auszuschließen, können mittels des Schalters 8 bei dieser Klappenstellung die Tasten 6a,6b,... elektrisch verriegelt sein.

Da aus Sicherheitsgründen die Bedienvorrichtung 4 im Ruhezustand und vor allem während der Fahrt hochgeklappt sein soll, ist vorgesehen, die Anzeige von Leitempfehlungen bei fahrendem Fahrzeug entweder zu unterbinden, wenn der Schalter 8 eine heruntergeklappte Bedienvorrichtung meldet, oder den Fahrer dadurch aufmerksam zu machen, daß bei anrollendem Fahrzeug eine Anzeige im Schriftzeichendisplay: Bedienvorrichtung schließen, angezeigt wird. Eine derartige Aufforderung kann auch über eine Sprachausgabe erfolgen.

Wie oben schon erwähnt, ist das Bedien- und Anzeigegerät 1 bzw. die Klappe 17 über eine Reihe von Kontakten, die in Fig.1 und 2 nicht dargestellt sind, mit dem Navigationsrechner 9 bzw. dem Radio 10 elektrisch verbunden. Zweckmäßigerweise ist aber vorgesehen, das Bedien- und Anzeigegerät 1 vom Navigationsrechner 9 lösbar anzuordnen, so daß es beim Verlassen des Fahrzeuges mitgenommen werden kann, beispielsweise um das Leitsystem für Diebe uninteressant zu machen. Dazu werden im Navigationsrechner 9 und im Bedienteil 1, wie an sich von Autoradios her bekannt, Codierungen eingespeichert, die einen Betrieb nur zulassen, wenn die entsprechende Codierung übereinstimmt. Ein weiterer Vorteil ist mit dem abnehmbaren Bedien- und Anzeigegerät dadurch gegeben, daß Reiseziele nicht nur im Fahrzeug, sondern auch außerhalb eingespeichert werden können. Die Einspeicherung der Reiseziele erfolgt über die Volltastatur 7 bei geöffneter Bedienvorrichtung 4. Um diese Tätigkeit auch außerhalb des Fahrzeugs oder evtl. durch den Beifahrer vornehmen zu können, weist das Bedien- und Anzeigegerät 1 einen Zielspeicher für eine Vielzahl von Adressen und Zielcoordinaten auf, sowie eine elektrische Verbindung für eine externe Stromversorgung, die von einem Netzgerät oder auch einem Batteriesatz (Power pack) erfolgen kann.

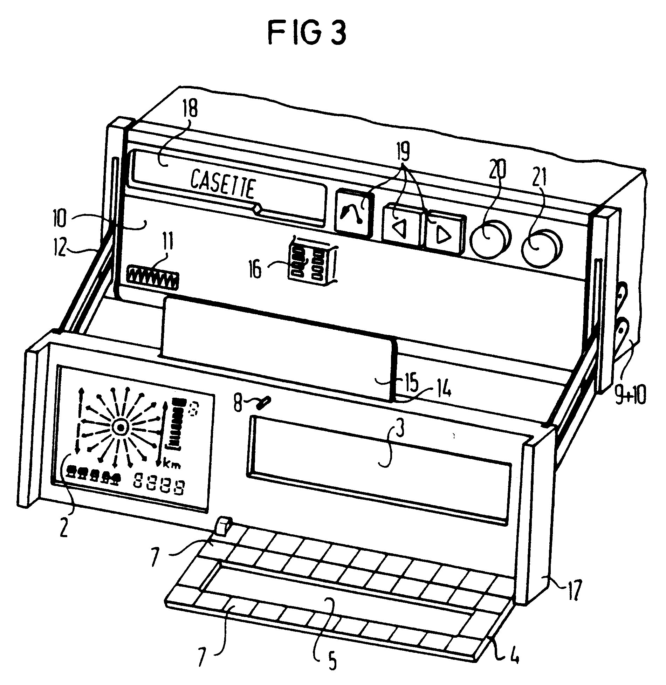

Wie aus den Fig. 1 bis 3 ersichtlich, weist das Bedien- und Anzeigegerät 1 bzw. die Klappe 17 eine Einschuböffnung 14 (Schlitz) für eine Chipkarte 15 auf. Diese Chipkarte 15 wird unmittelbar mit dem Navigationsrechner 9 kontaktiert (siehe Fig.3), der auch ein entsprechendes Kartenlesegerät beinhaltet. Bei diesem Ausführungsbeispiel ist die Einschuböffnung 14 auf der Oberseite des Bedien- und Anzeigegerätes 1 angeordnet.

Aus Fig.3 ist ersichtlich, daß das Bedien- und Anzeigegerät 1 bzw. die Klappe 17 über eine Reihe von Kontakten 11 mit dem Radio 10 bzw. mit dem Navigationsrechner 9 elektrisch verbindbar ist, so daß das Bedien- und Anzeigegerät 1 vom Radio 10 abtrennbar ist und beim Verlassen des Fahrzeuges mitgenommen werden kann.

In der Fig.3 ist das Bedien- und Anzeigegerät 1 als Klappe 17 gezeigt, wobei das insgesamt herunterklappbare Bedien- und Anzeigegerät 1 bzw. 17 an der Frontseite eines Autoradios 10, das beispielsweise auch ein Kassettenteil (Kassetten-Einführöffnung 18) oder ein CD-Player aufweisen kann, angeordnet ist. Dabei ist in dem Autoradio 10 der Navigationsrechner 9 mit integriert.

Über einen entweder einfachen Klappmechanismus oder aber über eine mechanische Vorrichtung, die ein paralleles Herunterklappen 12 des Bedien- und Anzeigegerätes 1 zur Frontseite des Radioteils gestattet, ist ein Kombinationsgerät gebildet, das sowohl für den Rundfunkbetrieb als auch für die Leitinformationen genutzt werden und als kompaktes Gerät in die normale Einschieböffnung für Autoradios eingebracht werden kann. Die normale Radiobedienung sowie die Handhabung des Gerätes für die Anzeige von Verkehrsleitinformationen erfolgt im Normalfall bei hochgeklappter Bedienvorrichtung 4 über die Tasten 6a,6b ... in Verbindung mit der Schriftzeichenanzeige 3. Das als Klappe 17 ausgebildete Bedien- und Anzeigegerät 1 ist in Fig.2 in der heruntergeklappten Stellung dargestellt. Zur Einführung bzw. zur Entnahme von Kompaktkassetten sowie zum Einstellen beispielsweise der Höhen/Tiefen der Balance und anderer spezieller Rundfunkfunktionen, muß das Bedien- und Anzeigegerät 1 heruntergeklappt 17 sein. Anstelle eines Kassettenteils kann auch ein CD-Laufwerk im Kombinationsgerät Autoradio 10 und Navigationsrechner 9 vorgesehen sein. Dadurch ergeben sich zusätzliche Möglichkeiten, z.B. Adressenverzeichnisse mit Koordinaten für die Zielführung auf einer CD gespeichert anzubieten, wobei die vom CD-Laufwerk gelesenen Daten dem Navigationsrechner 9 übertragen werden.

Der Navigationsrechner 9 kann bei einem solchen Kombinationsgerät im Standardgehäuse des Autoradios mit untergebracht sein, beispielsweise unterhalb des Kassettenlaufwerks. Die Funkentstörung, die Spannungsregelung sowie die Niederfrequenzverstärker für eine evtl. Sprachausgabe von Leitinformationen können von den entsprechenden Komponenten des Autoradios mit übernommen werden, so daß ein solches Kombinationsgerät nicht nur platzsparend sondern auch preiswerter hergestellt werden kann.

Die Sende- und Lautstärkeneinstellung erfolgt bei einem solchen Kombinationsgerät bei hochgeklaptper Klappe 17 über die Tasten 6a,6b,..., wobei eine dieser Tasten als eine Mode-Taste 6a ausgebildet ist. So kann beispielsweise im Mode 1 eine Rundfunkbedienung, im Mode 2 ein Aufruf von eingespeicherten Fahrtzielen, im Mode 3 Abfragen von Touristeninformationen usw. durchgeführt werden. Durch Betätigung der Modetaste 6a werden diese Betriebsarten quasi durchgeblättert. Welche gerade wirksam ist, wird im Schriftzeichenfeld 3 optisch angezeigt. Darüberhinaus kann auch eine Modestellung über eine Sprachausgabe erleichtert werden, so daß der Fahrer gar nicht auf das Schriftzeichenfeld blicken muß.

In vorteilhafter Weises dient das Schriftzeichenfeld 3 im Rundfunkmode wie bei herkömmlichen Radios auch zur Kennzeichnung des eingestellten Rundfunksenders, z.B. Anzeige der Sendefrequenz, Mono- oder Sterioanzeige, bei Radios mit RDS-Decoder auch der Name des Rundfunksenders usw. Darüber hinaus können auch häufig gewünschte Rundfunksender auf gleiche Weise eingespeichert bzw. aufgerufen werden, wie Fahrtziele, wobei der Bedienkomfort durch die Volltastatur 7 (bei heruntergeklappter Bedienfeldvorrichtung 4) erheblich gesteigert wird. Die Lautstärke kann beispielsweise mit den zwei Tasten 6d digital eingestellt werden, z.B. der nach links weisende Pfeil für leiser bzw. der nach rechts weisende Pfeil für lauter. Ebenso kann auch die Tastenanordnung 6b entweder für eine Balanceregelung oder aber für eine Einstellung des Lautstärkenverhältnisses von den vorderen und den hinteren Lautsprechern vorgesehen sein.

In Fig.3 ist noch ersichtlich, daß bei hochgeklapptem Zustand eine Kontaktierung des Bedien- und Anzeigegerätes 1 mit dem Navigationsrechner 9 über Bedienkontakte 11 erfolgt. Eine Kontaktierung der Chipkarte 15 kann über separate Chipkartenkontakte 16 erfolgen, die auf der Frontseite des Radioteils 10 erhaben angebracht sind. Durch eine entsprechende Aussparung in der Rückwand des Bedien- und Anzeigegerätes 1 kann dann die Kontaktierung direkt an den Kontaktflächen der Chipkarte 15 erfolgen.

Um die Kontaktflächen der Chipkarte nicht unzulässig abzunutzen, wird das gesamte Bedien- und Anzeigegerät zunächst in ein entsprechendes Drehlager 12 am Navigationsrechner 9 bzw. Radio 10 eingesetzt und dann durch eine Drehbewegung an die Kontakte 16 des Chipkartenlesers im Navigationsrechner herangeführt und an diesem verrastet. Bemißt man den Kontakthub so klein wie unbedingt erforderlich, so ergibt sich nur eine sehr kleine Kontaktreibung und damit eine geringe Kontaktflächenabnutzung.

Was hier zeichnerisch nicht dargestellt, jedoch eine vorteilhafte Ausgestaltung bzw. Weiterbildung der Erfindung ist, ist dadurch gegeben, daß das Bedien- und Anzeigegerät 1 auch zur Bedienung von Autotelefonen genutzt werden kann. So kann in vorteilhafter Weise der im Bedien- und Anzeigegerät 1 vorgesehene Reisezielspeicher auch als Namensspeicher für Telefonnummern verwendet werden. Dabei können neben diesen Telefonnummern Namen und auch zugeordnete geografische Koordinaten mit abgespeichert werden. Die Einspeicherung kann ebenso über die Volltastatur 7 erfolgen wie die Eingabe nicht vorgespeicherter Telefonnummern. Über die bereits oben erwähnte Modetaste 6a kann der Fahrer mit Hilfe des Kombinationsgerätes 9/10 die Betriebsart Autotelefon aufrufen, wenn er mit einer bestimmten Person telefonieren möchte. Das Aufrufen vorgespeicherter Namen mit Telefonnummern ist auch während der Fahrt über die Tasten 6a und 6b möglich. Ein solcher Bedienvorgang lenkt den Fahrer nicht stärker ab als die Sendereinstellung beim Radio und ist deshalb auch mit verkehrssicherheitlichen Erwägungen vereinbar.

Zur Verwendung als Telefonwählgerät ist der Navigationsrechner 9 mit einer Übertragungsschnittstelle anstelle der normalen Wähltastatur im Handapparat mit dem mobilen Telefongerät, das irgendwo am Fahrzeug angeordnet ist, verbunden. Die Funktion des Handapparates kann dabei auf die Unterbringung der Hörkapsel und des Mikrofons eingeschränkt werden, sofern nicht das Kombinationsgerät auch als Freisprecheinrichtung verwendet wird. Dabei wird der Lautsprecher und die entsprechenden elektronischen Schaltungen des Autoradios mit herangezogen, wobei man zweckmäßigerweise eine automatische Lautstärkenregelung vorsehen kann. Es ist lediglich ein separates Mikrofon für das Freisprechen noch vorzusehen. Auch für das Telefonieren kann - wie bereits im Autotelefon schon vorgesehen - eine Chipkarte, die in das Bedien- und Anzeigegerät eingeführt wird, benutzt werden.

Es ist noch zu erwähnen, daß das, wie in Fig.1 und 2 beschrieben, abnehmbare Bedien- und Anzeigegerät auch unabhängig von der Anordnung vor den Navigationsrechner an einer anderen Stelle mit Hilfe eines Schwanenhals angeordnet sein kann, was jedoch zu einem größeren Installationsaufwand führt.

## Patentansprüche

1. Bedien- und Anzeigegerät (1) mit zumindest einem frontseitig angeordnetem Anzeigefeld und mit einem ersten, an der Frontseite angeordnetem Bedienfeld (6) sowie einem zweiten, nicht ständig zugänglichem Bedienfeld (7), wobei das Bedien- und Anzeigegerät (1) in einer Armaturentafel einbringbar angeordnet ist und mit einem zugehörigen Navigationsrechner in Verbindung steht,
**dadurch gekennzeichnet**, daß das Bedien- und Anzeigegerät (1) mit dem Navigationsrechner (9) eine kompakte, jedoch voneinander trennbare Einheit bildet, die Außenmaße aufweist, welche einen Einbau in den genormten Einbauraum für Autoradios gestatten.

2. Bedien- und Anzeigegerät (1) für Verkehrsinformationen in einem Fahrzeug, mit zumindest einem frontseitig angeordnetem Anzeigefeld und mit einem ersten, an der Frontseite angeordnetem Bedienfeld (6) sowie einem zweiten, nicht ständig zugänglichem Bedienfeld (7), wobei das Bedien- und Anzeigegerät (1) in einer Armaturentafel einbringbar angeordnet ist und mit einem zugehörigen Navigationsrechner in Verbindung steht, **dadurch gekennzeichnet**, daß der Navigationsrechner (9) in einem dafür vorgesehenen Autoradio (10) mit Normmaßen integriert ist, und daß das Bedien- und Anzeigegerät (1) als Klappe (17) ausgebildet ist, welche an der Frontseite des Autoradios (10) angeordnet ist.

3. Bedien- und Anzeigegerät nach Anspruch 1 oder 2, **dadurch gekennzeichnet**, daß an der Frontseite des Bedien- und Anzeigegerätes (1) bzw. der Klappe (17) eine aufklappbare Bedienvorrichtung (4) mit einem Sichtfenster (5) angeordnet ist, daß die Bedienvorrichtung (4) auf der Vorderseite das erste Bedienfeld (6) mit während der Fahrt benutzbaren Bedienelementen (6a,b,c, ...) und auf der Rückseite (Innenseite) das als Volltastatur ausgebildete zweite Bedienfeld (7) aufweist, welches nur im aufgeklappten Zustand bedienbar ist, daß das Anzeigefeld ein Grafik-Display (2) zur Leitinformationsanzeige und zusätzlich ein separates Schriftzeichen-Display (3) hinter dem Sichtfenster (5) aufweist, und daß das Bedien- und Anzeigegerät (1) bzw. die Klappe (17) über Kontakte (11) mit dem Navigationsrechner (9) bzw. Autoradio (10) elektrisch verbindbar ist.

4. Bedien- und Anzeigegerät nach Anspruch 2 und 3, **dadurch gekennzeichnet**, daß weitere, selten benötigte Radio-Bedienelemente (19...21) unmittelbar an der Frontseite des Autoradios (10) angeordnet und nur bei heruntergeklappter Klappe (17) zugänglich sind.

5. Bedien- und Anzeigegerät nach Anspruch 2 und 3, **dadurch gekennzeichnet**, daß das Schriftzeichen-Display (3) bei Radiobetrieb als Radio-Display dient.

6. Bedien- und Anzeigegerät nach Anspruch 3, **dadurch gekennzeichnet**, daß ein von der hochgeklappten Bedienvorrichtung (4) betätigbarer Schalter (8) vorgesehen ist, welcher bei hochgeklappter Bedienvorrichtung (4) die Bedienelemente (6a,6b) des ersten Bedienfeldes (6) und bei aufgeklappter Bedienvorrichtung (4) die Volltastatur (7) elektrisch entriegelt, wobei die Volltastatur (7) nur bedienbar ist, wenn mittels eines Wegimpulsgebers und dem Navigationsrechner (9) ein Fahrzeugstillstand signalisiert ist.

7. Bedien- und Anzeigegerät nach Anspruch 6, **dadurch gekennzeichnet**, daß im Grafik- oder Schriftzeichen-Display (2; 3) oder akustisch bei fahrendem Fahrzeug der Zustand der aufgeklappten Bedienvorrichtung (4) angezeigt wird.

8. Bedien- und Anzeigegerät nach einem der vorhergehenden Ansprüche, **dadurch gekennzeichnet**, daß das Bedien- und Anzeigegerät (1) bzw. die Klappe (17) eine Einschuböffnung (14) für eine Chipkarte (15) und der Navigationsrechner (9) ein Chipkarten-Lesegerät aufweist, und daß das Autoradio (10) an seiner Frontseite gesonderte Chipkarten-Kontakte (16) für eine unmittelbare Kontaktierung der eingeführten Chipkarte aufweist.

9. Bedien- und Anzeigegerät nach einem der vorhergehenden Ansprüche, **dadurch gekennzeichnet**, daß das Bedien- und Anzeigegerät (1) bzw. die Klappe (17) über Kontakte (11) mit dem Navigationsrechner (9) elektrisch verbunden ist und einen eigenen Zielspeicher sowie einen Anschluß für eine externe Stromversorgung aufweist.

## Claims

1. Control and display device (1) having at least one display panel, arranged on the front side, and having a first control panel (6), arranged on the front side, and a second control panel (7), which is not constantly accessible, the control and display device (1) being arranged such that it can be installed in a dashboard and is in connection with an associated navigation computer, characterized in that the control and display device (1) forms with the navigation computer (9) a compact, but mutually separable unit which has outside dimensions which allow installation into the standardized installation space for car radios.

2. Control and display device (1) for traffic information in a vehicle, having at least one display panel, arranged on the front side, and having a first control panel (6), arranged on the front side, and a second control panel (7), which is not constantly accessible, the control and display device (1) being arranged such that it can be installed in a dashboard and is in connection with an associated navigation computer, characterized in that the navigation computer (9) is integrated in a car radio (10) which is intended for this purpose and has standard dimensions, and in that the control and display device (1) is designed as a flap (17) which is arranged on the front side of the car radio (10).

3. Control and display device according to Claim 1 or 2, characterized in that on the front side of the control and display device (1) or of the flap (17) there is arranged a control means (4) which can be swung open and has a viewing window (5), in that the control means (4) has on the front side the first control panel (6), with control elements (6a, b, c ...) which can be used during the journey, and on the rear side (inner side) the second control panel (7), which is designed as a full keyboard and can be operated only in the swung-open state, in that the display panel has a graphic display (2) for directional information display and additionally a separate character display (3) behind the viewing window (5), and in that the control and display device (1) or the flap (17) can be electrically connected via contacts (11) to the navigation computer (9) or the car radio (10).

4. Control and display device according to Claims 2 and 3, characterized in that further, rarely required radio control elements (19...21) are arranged directly on the front side of the car radio (10) and are accessible only when the flap (17) is swung down.

5. Control and display device according to Claims 2 and 3, characterized in that the character display (3) serves during radio operation as a radio display.

6. Control and display device according to Claim 3, characterized in that a switch (8) which can be operated from the swung-up control means (4) is provided, which switch electrically unlocks the control elements (6a, 6b) of the first control panel (6) when the control means (4) is swung up and electrically unlocks the full keyboard (7) when the control means (4) is swung open, the full keyboard (7) only being operable if a standstill of the vehicle is signalled by means of a travel pulse generator and the navigation computer (9).

7. Control and display device, according to Claim 6, characterized in that the state of the swung-open control means (4) is indicated in the graphic or character display (2; 3) or acoustically when the vehicle is travelling.

8. Control and display device according to one of the preceding claims, characterized in that the control and display device (1) or the flap (17) has a push-in opening (14) for a chip card (15) and the navigation computer (9) has a chip-card reader, and in that the car radio (10) has on its front side separate chip-card contacts (16) for a direct contacting of the inserted chip card.

9. Control and display device according to one of the preceding claims, characterized in that the control and display device (1) or the flap (17) is electrically connected via contacts (11) to the navigation computer (9) and has its own destination memory and a connection for an external power supply.

## Revendications

1. Appareil de commande et d'affichage (1) comportant au moins un panneau d'affichage disposé frontalement et un premier panneau de commande (6) disposé sur la face avant ainsi qu'un second panneau de commande (7) non accessible en permanence, l'appareil de commande et d'affichage (1) étant disposé de manière à pouvoir être inséré dans un tableau de bord et étant relié à un calculateur ou ordinateur associé de navigation,
caractérisé par le fait que l'appareil de commande et d'affichage (1) forme, avec un calculateur de navigation (9), une unité compacte, qui, cependant, peut être divisée en ses éléments et possède des dimensions extérieures qui permettent un montage dans l'espace de montage normalisé pour des autoradios.

2. Appareil de commande et d'affichage (1) pour des informations de trafic dans un véhicule, comportant au moins un panneau d'affichage disposé frontalement et un premier panneau de commande (6) disposé sur la face avant ainsi qu'un second panneau de commande (7) non accessible en permanence, l'appareil de commande et d'affichage (1) étant disposé de manière à pouvoir être inséré dans un tableau de bord et étant relié à un calculateur ou ordinateur associé de navigation, caractérisé par le fait que le calculateur de navigation (9) est intégré dans un autoradio (10) prévu à cet effet et possédant des cotes normalisées, et que l'appareil de commande et d'affichage (1) est réalisé sous la forme d'un volet (17), qui est disposé sur la face avant de l'autoradio (10).

3. Appareil de commande et d'affichage suivant la revendication 1 ou 2, caractérisé par le fait que sur la face avant de l'appareil de commande et d'affichage (1) ou du volet (17) est prévu un dispositif rabattable de commande (4), qui comporte un voyant (5), que le dispositif de commande (4) possède, sur la face avant, le premier panneau de commande (6) comportant des éléments de commande (6a, b, c, ...) utilisables pendant le déplacement, et, sur la face arrière (côté intérieur), le second panneau de commande (7) réalisé sous la forme d'un clavier complet et qui peut être commandé uniquement dans l'état rabattu, que le panneau d'affichage comporte un dispositif d'affichage de graphiques (2) servant à indiquer une information de guidage et, en outre, un dispositif séparé d'affichage de signes d'écriture (3), en arrière du voyant (5), et que l'appareil de commande et d'affichage (1) ou le volet (17) peut être relié électriquement au calculateur de navigation (9) ou à l'autoradio (10) par l'intermédiaire de contacts (11).

4. Appareil de commande et d'affichage suivant les revendications 1 et 2, caractérisé par le fait que d'autres éléments de commande (19...21), rarement nécessaires, de la radio sont disposés directement sur la face avant de l'autoradio (10) et sont accessibles uniquement lorsque le volet (17) est rabattu vers le bas.

5. Appareil de commande et d'affichage suivant les revendications 2 et 3, caractérisé par le fait que le dispositif d'affichage de signes d'écriture (3) est utilisé, dans le cas du fonctionnement de la radio, en tant que dispositif d'affichage radio.

6. Appareil de commande et d'affichage suivant la revendication 3, caractérisé par le fait qu'il est prévu un interrupteur (8) pouvant être actionné par le dispositif de commande (4) dans sa position relevée et qui, lorsque le dispositif de commande (4) est dans sa position relevée, déverrouille électriquement les éléments de commande (6a, 6b) du premier panneau de commande (6) et, lorsque le dispositif de commande (4) est rabattu vers le bas, déverrouille électriquement le clavier complet (7), le clavier complet (7) pouvant être commandé uniquement lorsqu'un état d'arrêt du véhicule est signalé au moyen d'un générateur d'impulsions de distance et du calculateur de navigation (9).

7. Appareil de commande et d'affichage suivant la revendication 6, caractérisé par le fait que l'état du dispositif de commande rabattu (4) est affiché dans le dispositif d'affichage de graphiques ou de signes d'écriture (2; 3) ou est indiqué acoustiquement dans le cas où le véhicule se déplace.

8. Appareil de commande et d'affichage suivant les revendications précédentes, caractérisé par le fait que l'appareil de commande et d'affichage (1) ou le volet (19) possède une ouverture d'insertion (14) pour une carte à puce (15) et le calculateur de navigation (9) possède un appareil de lecture de cartes à puce, et que l'autoradio (10), possède, dans sa face avant, des contacts particuliers (16) de carte à puce pour l'établissement d'un contact direct avec la carte à puce introduite.

9. Appareil de commande et d'affichage suivant les revendications précédentes, caractérisé par le fait que l'appareil de commande et d'affichage (1) ou le volet (17) est relié électriquement par l'intermédiaire de contacts (11) au calculateur de navigation (9) et possède une mémoire propre de destinations ainsi qu'une borne pour une alimentation extérieure en courant.
